# EUROPEAN PATENT APPLICATION

(11) **EP 2 098 793 A2**
(43) Date of publication of application: **09.09.2009**
(21) Application number: 08019269.3
(22) Date of filing: 04.11.2008
(51) Int. Cl.: F24D 19/06

(54) **Structure of a radiator for heating rooms**

(30) Priority: 07.03.2008 IT MI20080377
(71) Applicant: DL RADIATORS S.p.A., 31100 Treviso (IT)
(72) Inventor: De'Longhi, Giuseppe, 31100 Treviso (IT)
(74) Representative: Rapisardi, Mariacristina

(57) **Abstract**

The structure of a radiator for heating rooms, comprises a supplementary framework associated to the front face of the radiator facing the room and having at least one frame defined by at least two first load bearing elements developing bottom upwards and by at least two second load bearing elements developing with direction adapted to cross said first elements, the first and second elements enclosing between them at least one surface of any shape defined by at least one panel supported by said first and second load bearing elements.

## Description

The present invention refers to a structure of a radiator for heating rooms.

As known, currently available in the market are various types of radiators of the water type, electrical type with diathermic oil or of the combined type.

In particular, of late, metal radiators made of steel tubulars such as for example with a flat blade have had a great success.

However, known radiators very often do not match perfectly with the aesthetic aspect of the rooms where they are installed and they do not provide a high performance due to the enclosed and hidden positions they are therefore relegated.

Consequently, currently there have been attempts to make radiators with gracious shapes and suitable to enhance their arrangement in a room without altering the aesthetic properties of the latter.

However, though considerably reducing the drawbacks observed above, the latter solution on the contrary determines a substantial increase in terms costs of the radiator, thus hindering its distribution in the market.

Therefore, the technical task of the present invention is that of providing a structure of a radiator for heating rooms capable of eliminating the aforementioned technical drawbacks observed in the prior art.

In the framework of this technical task, an object of the present invention is that of providing a structure of a radiator for heating rooms, capable of perfectly matching with the aesthetic properties of a room and simultaneously providing a high performance.

Another object is that of providing a structure of a radiator for heating rooms, such radiator being a valid furnishing element in itself and being capable of performing further advantageous functions alongside the main heating one.

Further object of the invention is that of providing a structure of a radiator for heating rooms which, alongside the abovementioned advantages, is capable of modifying its aesthetic and/or functional value in a quick and simple manner depending on the requirements and also having a simple and inexpensive structure.

The technical task, alongside these and other objects, according to the present invention are attained by making a structure of a radiator for heating rooms, **characterised in that** it comprises a supplementary framework associated to the front face of the radiator facing the room and having at least one frame defined by at least two first load bearing elements developing bottom upwards and by at least two second load bearing elements developing with a direction adapted to cross said first elements, said first and second elements enclosing between them at least one surface of any shape defined by at least one panel supported by said first and second load bearing elements.

Furthermore, other characteristics of the present invention are defined in the subsequent claims.

Further characteristics and advantages of the invention shall be clearer from the description of a preferred but not exclusive embodiment of the structure of a radiator for heating rooms according to the finding, illustrated for indicative and nonlimiting purposes in the attached drawings, wherein:
- figure 1 is an elevated front view of the framework applied to a radiator according to the finding.

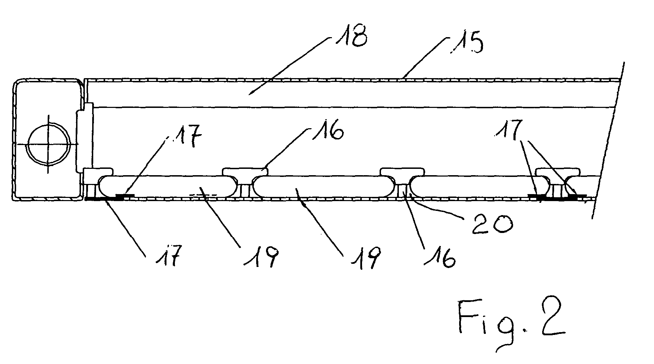

- figure 2 is a view along the line of section A-A of fig. 1 according to the finding.
- figure 3 is an elevated side view of the framework applied to a radiator according to the finding.
- figure 4 is a top view of the framework applied to a radiator according to the finding.

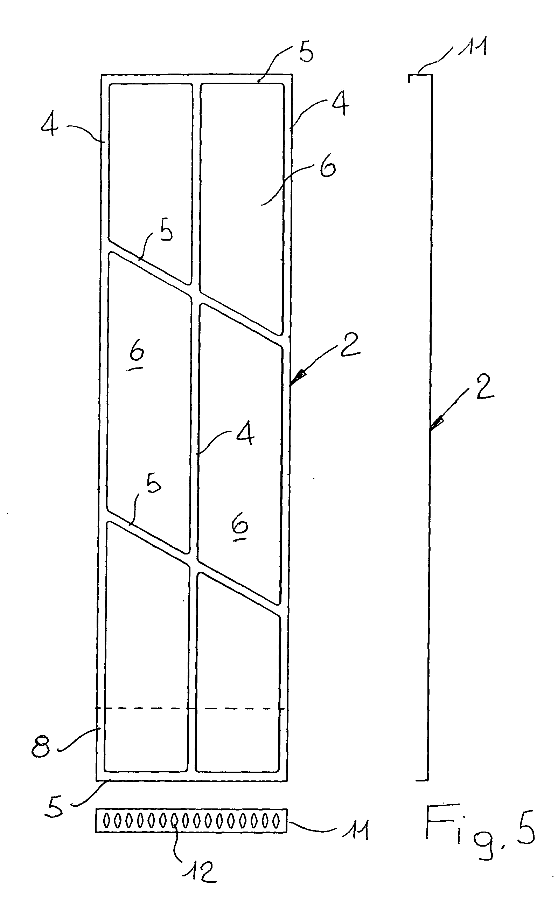

- figure 5 generally shows a framework according to the finding according to a front and side view.

Referring to the abovementioned figures, shown is a structure of a radiator for heating rooms indicated in its entirety by reference number 1.

Advantageously, the structure of a radiator comprises a supplementary framework 2 associated to the front face of the radiator facing the room.

The framework 2 has at least one frame defined by at least two first load bearing elements 4 developing bottom upwards and by at least two second load bearing elements 5 developing with a direction adapted to cross the first load bearing elements 4.

Therefore, the first and second load bearing elements 4 and 5 enclose between them a surface of any shape defined by at least one panel 6 which is supported both by the first and second load bearing elements.

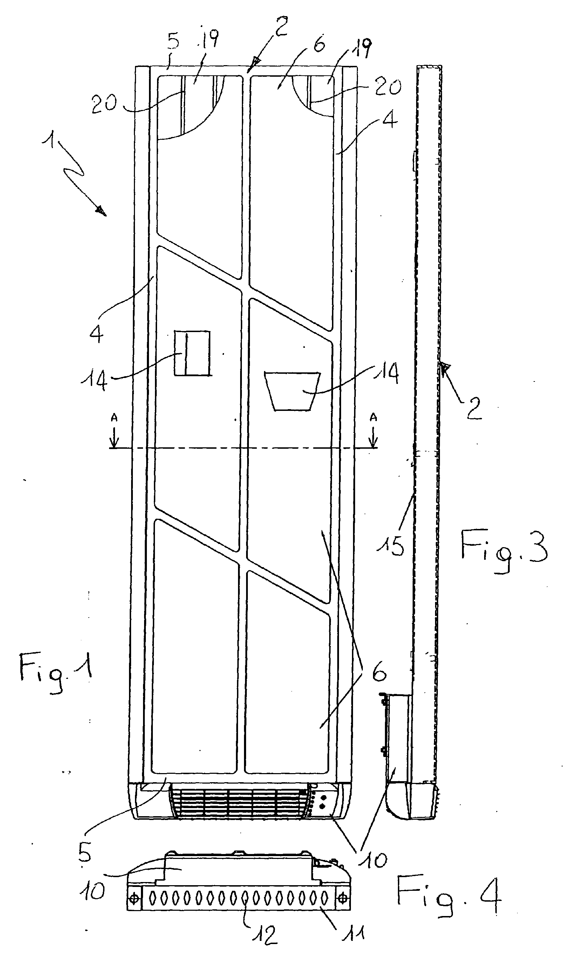

In particular, for example, represented in figure 1 is a frame defined by two rectilinear first load bearing elements 4 and two rectilinear second load bearing elements 5 which intersect the former orthogonally in such a manner to define a rectangular frame.

Present in this frame is a further first element 4 intersected by two second elements 5 having an oblique rectilinear profile in a manner to define six panels 6.

Therefore, clearly, the framework can be of any shape and enclose within it a considerable number of panels 6, also of any shape, depending on the aesthetic and functional requirements required of the framework according to the intended use.

As mentioned, the supplementary framework 2 may be of any shape and it may cover, only partially or integrally, the entire front face of the radiator in such a manner to conceal it completely.

In a structural variant, the framework 2 has one of its end parts 8 - upper and/or lower - developing beyond the surface of the front face of the radiator.

In particular, the end part 8 may preferably be hinged to the remaining part of the framework in such a manner to be lifted and allow access to a compartment arranged between the same framework and the wall onto which the radiator is applied. Furthermore, the end part may also provide for the application of an overlay panel or contain an electronic device or, as specified hereinafter, a blower 10.

Preferably, in the upper zone of the framework, the load bearing element 5 has a bent edge 11 provided with slots 12 to allow the exit of hot air passing therethrough during the rising phase.

Same case applies to the load bearing elements 4 having a bent edge (not indicated) both adapted to form an aesthetic/functional wall, in the illustrated case already provided for by the sides of the radiator (wet by the fluid), which generates the interspace 18, as well as the possibility, during the construction step, of providing attachments for fixing any supplementary accessories such as hooks, handles, holders for various items, shelves etc.

Furthermore, the framework 2 may be overlapped on the panels 6 or the latter can be arranged coplanar with respect to the framework itself.

In the second case, the panels are directly cut by a sheet when making the framework 2 and thus once coloured or treated in the preferred manner they can be reinserted into the openings they left on the framework during the cutting operation thus avoiding any off-cuts when making the framework and simultaneously obtaining a covering for the surface of the radiator of any colour.

As easily observable, obtained in this manner through the use of the framework 2, and the panels 6 is an increase of the surface of irradiation and an increase of the thermal mass of the radiator.

Further attained, given that the framework 2 is flat, just like the panels 6, is an easier cleaning of the surface with respect to cleaning the surface defined by the traditional radiator formed by filled 19 and void 20 spaces.

Additionally, an ideal thermal exchange is attained due to this application in that there is a direct contact extended between the framework and its panels and the surface flowed through by the heating fluid circulating in the radiator.

Obviously, the framework object of the finding, can be applied to any type of radiator produced in series or under special production and it can be applied to the same during the production cycle or also subsequently in that it is also made as an accessory.

That done, consequently, the framework allows an easy and complete interchangeability of the framework on a radiator obtaining a final product completely different in terms of aesthetic impact, functionality and energy saving properties.

To obtain the abovementioned advantages, the panels 6 are normally made of material adapted to conduct heat, such as for example any metal material or alloy, be it compact, perforated, micro-perforated, grated, striped or drawn. Furthermore, the panels may be made up of two or more overlapped elements, even made of different material and structure, amplifying the combination, shapes and colour variants; but this does not exclude that at least one panel might for example be made with a surface made of any other material or reflecting material in such a manner to appear as a mirror or as a glass or micro-perforated or bricked surface, in such a manner to be illuminated through a source of light arranged at the back of the radiator, or be entirely or partially decorated through high definition printing.

This does not imply the exclusion of using one or more panels with a variable lighting and heat production, such as sources of ultraviolet rays for the purposes they might be intended for in a house.

For example, it can be specified that one or more panels can for example be provided with containers 14 held inside which is a liquid which, by evaporating through the heat produced by the radiator and transmitted to the panels and the framework, can humidify and perfume the room.

Furthermore, provided for is also the possibility of placing, on determined accessories present on one or more panels, creams or other products which are heated to enhance their function and not feel cold to the touch once spread on the body.

As mentioned, possibly provided for on the lower part of the radiator and framework 2 is an air blower 10, with or without a remote control, to increase the propagation of heat in the room, as well as quicken the adjustment of the temperature required in the room itself.

The blower is capable of suctioning air at the rear part and conveying it to the front part and/or into an interspace 18 of the radiator. Possibly provided therein is also a back element 15, which defines the interspace 18, adapted to facilitate and enhance the convection generating a chimney-effect and also serving as a container element for the application of various accessories, lamps and the related connections.

Advantageously, the framework 2, is connected to the radiator by means of bushes and tie-rods 16 thus allowing a good and quick anchoring but also allowing a relative movement between the framework and the radiator in such a manner to allow and absorb any thermal dilatations of the latter.

In some cases, the connection also provides for the use of special hooks 17.

Thus, the operation of colouring the final product is triple, not only determined by arranging two or more panels of different colours adjacent to each other, but also by interposing a third accompanying colour, the one of the framework, with a colour gradation, with possibility of shades or in sharp contrast - such as for example by means of chromium plating, polishing, satinising, gold plating etc (galvanic treatments in general) - with the painting.

The products thus made may also follow the evolution of interior design of a house allowing suitable matching, also with reference to the wall of location, with the possibility of emerging in sharp contrast or entirely camouflaging due to the application, on the panels, of a photo of a wall (e.g. Venetian plaster) or even ceramic or marble tiles with an extremely high definition.

Obviously, the photos imprinted by means of a special technology, may include various endless themes ranging from imagination to landscapes, from nature to art paintings, from current affairs to "portrait photos".

The light can be light variable or heat producing, it can also serve as a night light, courtesy light, reading light, ornamental furnishing and lighting lamp.

Such concept can be extended up to the integration on radio apparatus panels, flat screen apparatus, monitor touch screen, apparatus for programming, controlling and reading data (through the use of any transmission system (cable, infrared, radio, fibre optic etc) and it can obviously be integrated with a BUS backbone which allows having a home automation system, which through a control, allows obtaining multiple functions with the possibility of expanding it on all the peripherals possibly provided for in the house.

In practice, it has been observed how a structure of a radiator for heating rooms according to the invention is particularly advantageous to allow increasing the irradiation surface and the thermal mass of a traditional radiator, simultaneously improving the aesthetic properties thereof.

The structure of a radiator for heating rooms thus conceived is susceptible to various modifications and variants, all falling within the scope of the inventive concept; furthermore, all the details can be replaced by technically equivalent elements.

In practice, the material used, as well as the dimensions, may vary depending on the requirements and the state of art.

## Claims

1. Structure of a radiator for heating rooms, **characterised in that** it comprises a supplementary framework associated to the front face of the radiator facing the room and having at least one framework defined by at least two first load bearing elements developing bottom upwards and by at least two second load bearing elements developing with a direction adapted to cross said first elements, said first and second elements enclosing between them at least one surface of any shape defined by at least one panel supported by said first and second load bearing elements.

2. Structure of a radiator according to the preceding claim, **characterised in that** said supplementary framework covers the entire surface of said front face.

3. Structure of a radiator according to one or more of the preceding claims, **characterised in that** said framework has at least one of its end parts developing beyond said surface of said front face.

4. Structure of a radiator according to one or more of the preceding claims, **characterised in that** said end part is hinged to said framework.

5. Structure of a radiator according to one or more of the preceding claims, **characterised in that** said framework has at least one of said two second load bearing elements having one of its edges bent and slots for letting hot air out.

6. Structure of a radiator according to one or more of the preceding claims, **characterised in that** said framework, has on at least one of said first elements a bent edge adapted to form an aesthetic/functional part which defines said interspace, said edge being adapted to be prepared for fixing any supplementary accessory.

7. Structure of a radiator according to one or more of the preceding claims, **characterised in that** said framework is overlapped on said at least one panel.

8. Structure of a radiator according to one or more of the preceding claims, **characterised in that** said framework is coplanar to said at least one panel.

9. Structure of a radiator according to one or more of the preceding claims, **characterised in that** said framework allows providing and combining any kind of panels, even with bevelled, rounded off and many other types of corners facilitating arranging the panels adjacent to each other and absorbing the working tolerances.

10. Structure of a radiator according to one or more of the preceding claims, **characterised in that** said panel is made of material adapted to conduct heat.

11. Structure of a radiator according to one or more of the preceding claims, **characterised in that** said panel has a container for holding liquids.

12. Structure of a radiator according to one or more of the preceding claims, **characterised in that** said panel has a reflecting surface.

13. Structure of a radiator according to one or more of the preceding claims, **characterised in that** said panel has a source of light.

14. Structure of a radiator according to one or more of the preceding claims, **characterised in that** said panel has a source of ultraviolet rays.

15. Structure of a radiator according to one or more of the preceding claims, **characterised in that** said panel has house accessories.

16. Structure of a radiator according to one or more of the preceding claims, **characterised in that** it comprises an air blower to increase and fasten the propagation of heat.

17. Structure of a radiator according to one or more of the preceding claims, **characterised in that** said blower is arranged at the lower part of said framework and covered by said panel.

18. Structure of a radiator according to one or more of the preceding claims, **characterised in that** the rear face facing a wall has a back element adapted to facilitate and improve the convection for the "chimney-effect", serve as a container for the application of accessories, lamps and related connections.

19. Structure of a radiator according to one or more of the preceding claims, **characterised in that** said framework has means for moveable anchoring to said radiator in such a manner to allow and absorb any possible thermal dilatations of the latter.
